# EUROPÄISCHE PATENTSCHRIFT

(11) **EP 1 035 972 B1**
(45) Veröffentlichungstag und Bekanntmachung des Hinweises auf die Patenterteilung: **26.09.2001**
(21) Anmeldenummer: 98965186.4
(22) Anmeldetag: 26.11.1998
(51) Int. Cl.: B32B 27/34, C08L 73/00, F16L 9/133, F16L 9/12, B32B 27/08, C08G 67/02

(54) **FLEXIBLE, THERMOFORMBARE MEHRSCHICHTFOLIE MIT VERBESSERTEM MASCHINENLAUF**
FLEXIBLE, THERMOFORMABLE MULTI-LAYER FILM WITH IMPROVED MOVEMENT IN A MACHINE
FILM MULTICOUCHE SOUPLE THERMOFORMABLE PRESENTANT UN GLISSEMENT EN MACHINE AMELIORE

(30) Priorität: 03.12.1997 DE 19753584
(43) Veröffentlichungstag der Anmeldung: 20.09.2000
(73) Patentinhaber: Wolff Walsrode Aktiengesellschaft, D-29655 Walsrode (DE)
(72) Erfinder: EGGERS, Holger, D-29664 Walsrode (DE); LUND, Klaus, deceased (DE); BRANDT, Rainer, D-29664 Walsrode (DE); SPERLICH, Bernd, D-29664 Walsrode (DE)
(74) Vertreter: Kutzenberger, Helga, Dr.
(86) Internationale Anmeldenummer: EP9807627
(87) Internationale Veröffentlichungsnummer: WO9928130

(56) Entgegenhaltungen:
- EP-A- 0 569 101
- WO-A-86/07012
- WO-A-96/18686

## Beschreibung

Die vorliegende Erfindung betrifft eine mehrschichtige siegelbare Folie mit einer innenliegenden Polyamidschicht sowie einer Außenschicht aus einem linearen, alternierend aufgebauten Copolymer aus Kohlenmonoxid und wenigstens einem ethylenisch ungesättigten Olefin, einer mindestens einlagig ausgeführten Siegelschicht auf der anderen Folienaußenseite sowie gegebenenfalls weiterer haftvermittelnder Verbindungsschichten. Die Erfindung umfaßt auch die Anwendung der genannten Folie auf Maschinen zur Herstellung von thermogeformten Verpackungen sowie die Verwendung der Folie für die Verpackung von Lebensmitteln.

Lebensmittel werden häufig in sogenannten Muldenpackungen verpackt. Solche Verpackungen lassen sich auf Tiefziehmaschinen aus einer auf diesen Maschinen zu einer Mulde thermogeformten Muldenfolie sowie einer zulaufenden, nicht thermogeformten, Deckelfolie herstellen. Beide Folien werden nach Tiefzug und Applikation des Füllgutes in der so hergestellten Mulde durch Heißsiegelung miteinander zu einem geschlossenen Container verbunden. Die Funktionsweise solcher Maschinen sowie der Aufbau auf solchen Maschinen bevorzugt verarbeiteter Folien ist beispielsweise in *The Wiley Encyclopedia of Packaging Technology* (Hrg. M. Bakker, D. Eckroth; John Wiley & Sons, 1986) sowie in *Nentwig* (Joachim Nentwig: Kunststoff-Folien, Carl Hanser Verlag 1994, München) niedergelegt.

Aus ökonomischen Gründen sind hohe Maschinenlaufgeschwindigkeiten für die Realisierung dieses Vorgangs vorteilhaft. Dies stellt besondere Anforderungen an die verwendete flexible Verpackungsfolie.

So werden häufig die thermogeformten Behälter unmittelbar nach Verlassen der Tiefziehmaschine auf Rutschen und Förderbändern weitertransportiert, um in einer nächsten Station in einer Transportverpackung zusammengefaßt zu werden.

Eine solche Transportverpackung ist beispielsweise ein Pappkarton. Typischerweise werden die einzelnen Muldenpackungen darin von Hand in dichter Packung neben- und übereinandergelegt. Bei diesem Vorgang ist es wichtig, daß die Muldenpackungen, insbesondere unter Einwirkung von Druck, äußerlich leicht gegeneinander verschiebbar sind. Weisen die Packungen hingegen eine erhöhte Reibung und dadurch einen merklichen Widerstand gegenüber einer solchen Verschiebung auf, so kann sich der Einpackvorgang in die Transportverpackung verzögern und damit die gesamte Abpackgeschwindigkeit herabsetzen.

Die genannten Rutschen, auf denen die Muldenverpackungen beispielsweise vom höhergelegen Förderband der Tiefziehmaschine auf ein tiefergeleges von der Tiefziehmaschine wegführendes Förderband transferiert werden, sind üblicherweise aus oberflächlich bearbeitetem Edelstahl ausgeführt. Je nach Neigung und Oberflächenrauhigkeit einer solchen Rutsche kann dort ein Blocken der Muldenverpackungen auftreten. In solchen Fällen stauen sich an dieser Stelle die nachfolgenden Packungen auf und zwingen zu einer Unterbrechung des Abpackvorgangs.

Eine wesentliche Voraussetzung für hohe Abpackgeschwindigkeiten ist daher eine hohe Gleitfähigkeit der Außenseite der eingesetzten Folie gegen sich selbst sowie gegen Metall.

Für die folgende Beschreibung der in den einzelnen Schichten enthaltenen Polymere gilt die Übereinkunft, daß, wenn nicht anderweitig kenntlich gemacht, Kurzzeichen für Kunststoffe nach DIN 7728 bzw. ISO 1043-1987 (E) verwendet werden.

Bei mehrschichtigen Aufbauten wird die Schichtenfolge durch eine Aneinanderreihung der Kurzzeichen der Polymere der entsprechenden Schichten oder anderweitig erläuterter Symbole, voneinander getrennt durch Schrägstriche, wiedergegeben. Die Seite der Siegelschicht ist dabei stets rechts. Dabei kann auch nur ein Teil der gesamten, die Folie ausmachenden, Schichtenfolge angegeben werden. In diesen Fällen ist ebenfalls die Seite der Siegelschicht stets rechts und nicht angegebene Schichten oder Kombinationen von Schichten durch drei Punkte (...) kenntlich gemacht. So beschreibt beispielsweise der Ausdruck .../PA/EVOH/.../d einen Aufbau mit einer nicht spezifzierten Außenschicht oder außenliegenden Schichtenfolge, gefolgt von einer im wesentlichen aus Polyamid bestehenden Schicht, gefolgt von einer im wesentlichen aus Ethylen/Vinylalkohol-Copolymerisat bestehenden Schicht, gefolgt von einer nicht spezifizierten Schicht oder Schichtenfolge sowie einer mit d näher zu spezifizierenden, auf der Siegelseite folgenden Schicht.

Die Angabe von Schmelzpunkten bezieht sich im folgenden auf den nach ASTM 3418 mit DSC-Analyse (Differential Scanning Calorimetry Analyse) bestimmten Wert.

Üblicherweise sind thermoformbare und heißsiegelbare Folien mehrschichtig aufgebaut und enthalten eine oder mehrere Schichten aus Polyamid (PA) oder Mischungen mit Polyamid. Als Polyamid wird überwiegend PA6, d.h. Polycaprolactam, aber auch andere PA-Typen wie die in untenstehender Tabelle genannten, eingesetzt. Diese Schichten verleihen der Folie eine hohe mechanische Stabilität bei Raumtemperatur und üblichen Gebrauchstemperaturen. Daneben erweichen sie bei Erwärmung und lassen somit eine, im wesentlichen bleibende, thermische Verformung der Folie zu einer Mulde zu. Folien für solche Einsatzzwecke enthalten neben polyamidhaitigen Schichten auch eine im folgenden als Siegelschicht bezeichnete Schichtenfolge.

Unter "Polyamid" versteht man im weitesten Sinne polymere Verbindungen, die durch die Säureamid-Gruppe -NH · CO- miteinander verknüpft sind (siehe auch *Kunststoff-Handbuch Band VI*, *Polyamide, Carl Hanser Verlag München 1966*). Man unterscheidet zwei Gruppen von Polyamiden. Aufbau aus einem Monomer durch Polykondensation von ω-Aminocarbonsauren oder Polymerisation ihrer Lactame zum Polyamid 6-Typ und solche, die aus zwei Monomeren (Diaminen und Dicarbonsäuren) durch Polykondensation zum Polyamid 66-Typ entstanden sind (*Gnauck, Fründt: Einstieg in die Kunststoffchemie, Carl Hanser Verlag München 1991*). Die Kennzeichnung der Polyamide erfolgt durch Zahlen, welche die Anzahl der C-Atome im Ausgangsstoff bzw. - bei zwei Komponenten - im Diamin (erste Zahl) und in der Dicarbonsäure (zweite Zahl) angeben bzw. durch eine Abkürzung der Bezeichnung des Diamins oder der Dicarbonsäure (z.B PA MXD6 aus dem Diamin m-Xylylendiamin und der Dicarbonsäure Adipinsäure).

| *Tabelle zur Erläuterung der Nomenklatur der Polyamide* | | | |
|---|---|---|---|
| Kurzzeichen | ω-Aminocarbonsäure bzw. Lactame | Diamin | Dicarbonsäure |
| PA 6 | ε-Caprolactam | - | - |
| PA 11 | 11-Aminoundecansäure | - | - |
| PA 12 | ε-Laurinlactam | - | - |
| PA 66 | - | Hexamethylendiamin | Adipinsäure |
| PA 610 | - | Hexamethylendiamin | Sebacinsäure |
| PA 6I | - | Hexamethylendiamin | Isophthalsäure |
| PA MXD6 - | | m-Xylylendiamin | Adipinsäure |
| PA 6/66 | ε-Caprolactam | Hexamethylendiamin | Adipinsaure |
| PA 6/6T | ε-Caprolactam | Hexamethylendiamin | Terephthalsäure |
| PA 6I/6T | - | Hexamethylendiamin | Isophthalsäure und Terephthalsäure |
| PA 6/6I | ε-Caprolactam | Hexamethylendiamin | Isophthalsäure |
| PA 6/66 | ε-Caprolactam und ε-Laurinlactam | - | - |

Die Siegelschicht besteht im einfachsten Fall aus einer einzelnen Schicht. Diese Schicht besteht bevorzugt aus Polyolefinen, wie z.B. Polyethylen (LDPE, HDPE) oder Ethylen/α-Olefin-Copolymerisaten (LLDPE), hergestellt mit konventionellen Ziegler-Natta-Katalysatoren bzw. mit Metallocen-Katalysatoren, oder aus aus Olefinen abgeleiteten Polymeren wie z. B. Ethylen/Vinylacetat-Copolymeren (EVA), Ethylen-Copolymerisaten mit ungesättigten Estern (z.B. EBA), Ethylen-Copolymerisaten mit ungesättigten Carbonsauren (z.B. EAA, EMAA) und Ionomeren. Auch Mischungen aus den genannten Stoffklassen sind zur Erzielung gewünschter Eigenschaftskombinationen üblich. Insbesondere die mit Metallocen-Katalysatortechnik hergestellten Ethylen/α-Olefin-Copolymerisate mit niedrigen Dichten (kleiner 0,92 g/cm³) zeichnen sich als Siegelschichtmaterialien wegen ihrer niedrigen Siegelanspringtemperaturen und des hohen Hot-Tack aus. Stand der Technik ist auch eine mehrschichtige Ausführung der Siegelschicht. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn, auszeichnet und die sich zur Folienmitte daran anschließende Schicht erst bei höheren Temperaturen schmilzt, jedoch dafür kostengünstiger ist oder durch eine höhere Schmelzefestigkeit die Produzierbarkeit einer solchen Siegelschicht als Blasfolie erst ermöglicht. Gegebenenfalls kommen auch haftvermittelnde Polymere aus den genannten Stoffgruppen oder auf deren Basis hergestellte, etwa mit Anhydrid durch Propfung modifizierte, Polymere zum Einsatz. Beispiele für solche Aufbauten sind die Schichtenfolgen LDPE/EVA oder LDPE/EAA/Ionomer.

Die Siegelschicht ermöglicht nach Überführung in den geschmolzenen Zustand eine feste Verbindung mit der Siegelschicht der Deckelfolie. Auf diese Weise gelingt es, die Verpackung luftdicht und mechanisch fest zu verschließen. Wichtigstes Merkmal der Siegelschicht ist daher ein Aufschmelzen bei deutlich niedrigeren Temperaturen als die polyamidhaltigen Schichten.

Gegebenenfalls enthalten solche Folien daneben weitere Schichten, wie beispielsweise Schichten, die die Permeation bestimmter Gase durch die Folie vermindern. Ein Beispiel hierfür ist eine Sauerstoffsperrschicht aus einem Ethylen/Vinylalkohol-Copolymer (EVOH). Dabei wird bevorzugt EVOH in Coextrusion zwischen zwei PA-Schichten, das heißt mit der Schichtenfolge PA/EVOH/PA eingesetzt und enthält bevorzugt 40 bis 85 Mol-% Vinylacetat, die zu mindestens 90% verseift sind.

Die Siegelschicht und die polyamidhaltige Schicht bzw. die polyamidhaltige Schichtenfolge sind üblicherweise miteinander und gegebenenfalls auch untereinander durch haftvermittelnde Schichten verbunden. Dabei besteht die Möglichkeit, alle oder einen Teil der Schichten gemeinsam zu coextrudieren, d.h. die Polymere dieser Schichten als Schmelzeströme zusammenzufuhren und in geschmolzener Form durch eine gemeinsame Düse strömen zu lassen. Für dieses Verfahren ist ein extrudierbarer Haftvermittler zur Verbindung erforderlich. Entsprechende Haftvermittler sind nach dem Stand der Technik beispielsweise mit Maleinsäureanhydrid modifizierte Polymere aus der Gruppe umfassend LDPE, LLDPE und EVA, es können aber auch ein EAA oder EMAA als Haftvermittler verwendet werden. Das Verfahren der Coextrusion ist wegen der geringeren Zahl der notwendigen Arbeitsgänge grundsätzlich ökonomisch vorteilhafter als die Laminierung getrennt vorgefertigter Schichten.

Folien des genannten Aufbaus lassen sich aber auch durch Extrusionsbeschichtung, das heißt dem Auftrag der Siegelschicht in geschmolzenem Zustand auf einen vorgefertigten polyamidhaltigen Trägerfilm, der auf der zu beschichtenden Seite bereits mit dem coextrudierten Haftvermittler oder einem nach der Extrusion aufgetragenen Primer versehen ist, herstellen.

Werden Trägerfilm und Siegelschicht getrennt vorgefertigt, so können sie nach dem Stand der Technik auch durch Verwendung eines Kaschierklebstoffs verbunden werden. Solche Klebstoffe sind üblicherweise unmittelbar vor dem Auftrag vermischte Isocyanate und Polyole, die nach dem Auftrag zu Polyurethanen aushärten.

Von besonderer Bedeutung für das Gleitverhalten der Muldenfolie ist die Tatsache, daß der Tiefziehvorgang die Gleitfähigkeit in den verformten Bereichen vorübergehend herabsetzen kann. Dies gilt erfahrungsgemäß in besonderem Maße für solche Folienaufbauten, bei denen Polyamid in der nicht-siegelseitigen Außenschicht der Folie enthalten ist. Wird hingegen die genannte Außenschicht der Folie aus einem polyolefinischen Thermoplast, beispielsweise aus Polyethylen (LDPE, HDPE), Polypropylen, Ethylen/Propylen-Copolymeren, Ethylen/α-Olefin-Copolymerisaten oder Mischungen daraus aufgebaut, so verringert sich die Gleitfähigkeit dieser Seite gegen sich selbst sowie gegen Metall durch den Tiefzug nicht oder in nicht merklichem Maße. Solche, dem Stand der Technik entsprechende Aufbauten, haben gegenüber Aufbauten, die in der nicht-siegelseitigen Außenschicht der Folie Polyamid enthalten, den Nachteil, daß die Siegelwerkzeuge auf niedrigeren Temperaturen gehalten werden müssen. Die zur Versiegelung notwenigen Temperaturen werden üblicherweise durch Kontakt der siegelseitenabgewandten Folienaußenseite zu einer beheizten Platte oder einem beheizten Profil in Gestalt der zu versiegelnden Bereiche durch Wärmeleitung in die und innerhalb der Folie erreicht. Dabei ist die Temperatur der mit der Folienheizung in Kontakt stehenden Seite stets höher als die in der Siegelschicht erreichte Temperatur. Wird andererseits zum Aufschmelzen der Siegelschicht eine gegebene Temperatur in der Siegelschicht benötigt, so ist die zum Erreichen dieser Temperatur notwendige Heizzeit umso kürzer, je höher die Temperatur der siegelseitenabgewandten Außenseite und damit die Temperatur der Folienheizung sein darf. Unter Umständen ist die Heizzeit in der Siegelstation einer Tiefziehmaschine für die gesamte Taktzahl und damit die Abpackgeschwindigkeit dieser Maschine bestimmend. Aus diesem Grunde ist es generell vorteilhaft, über eine Folie mit einer im oben beschriebenen Sinn möglichst hohen Temperaturbeständigkeit der siegelseitenabgewandten Außenseite zu verfügen.

Die einzelnen Polymertypen, die neben Polyamid als Außenschichtmaterial geeignet sind und Verwendung finden, haben dabei spezifische Vor- und Nachteile. Generell ist aus oben genannten Gründen ein hoher Schmelzpunkt günstig. LDPE ist günstig zu verarbeiten, aber weist bei einer Dichte von etwa 0,935 g/cm³ einen DSC-Schmelzpunkt von nur 115°C auf. Höhere Schmelzpunkte können mit diesem Material nicht erreicht werden. Ethylen/α-Olefin-Copolymerisate (LLDPEs) erreichen Schmelzpunkte bis etwa 128°C. Bei der Verarbeitung als Flachfolie weisen sie jedoch den Nachteil auf, nach Verlassen der Düse in der Schmelzefahne in stärkerem Maße als beispielsweise Polyamid einzuschnüren und verringern auf diese Weise die nutzbare Breite der Mehrschichtfolie. Das gleiche gilt in noch stärkerem Maße für homopolymeres Polypropylen sowie für Ethylen/Propylen-Copolymere, die Schmelzpunkte um 160°C bzw. im Bereich von 130 bis 150°C aufweisen. Im Vergleich dazu schmilzt Polyamid 6 erst bei deutlich höheren Temperaturen (220°C) auf. PA 66 beispielsweise, ein Polymerisat aus Adipinsäure und Hexamethylendiamin, hat einen Schmelzpunkt von ca. 255°C.

Daneben weisen die oben benannten polyolefinischen Werkstoffe den Nachteil auf, daß sie sämtlich gegenüber Metall und teilweise auch gegenüber weniger harten Materialien wie Holz oder harten Kunststoffen nicht kratzfest sind. Beim Transport kann sich das optische Erscheinungsbild von mit solchen Polymeren in der Außenschicht gefertigten Folien daher deutlich verschlechtern und die Attraktivität der Packung leiden.

Neben den genannten polyolefinischen Thermoplasten wird auch Polyethylenterephthalat (PET) häufig als Bestandteil der siegelseitenabgewandten Folienaußenseite verwendet. Üblicherweise kommt dabei biaxial gerecktes Polyethylenterephthalat (OPET) zum Einsatz. Es ist für tiefziehbare Folien jedoch prinzipiell ungeeignet, da es keine weitere Thermoformbarkeit der Folie mehr zuläßt. Ungerecktes Polyethylenterephthalat läßt sich grundsätzlich durch Extrusion oder Coextrusion mit weiteren Schichten zu einer tiefziehbaren Ein- oder Mehrschichtfolie verarbeiten. Dabei ist PET vor der Extrusion vorzutrocknen, um einen Kettenbruch der Makromoleküle durch Anwesenheit von Wasser auszuschließen. Hierfür notwendige Aggregate erfordern zusatzliche Investitions- und Betriebskosten. Eine reine PET-Folie hat dabei den Nachteil einer zu hohen Steifigkeit und ist aus diesem Grunde für flexible Folienanwendungen ebenfalls nicht geeignet. Coextrudierte, polyamidhaltige Folien mit PET in der Außenschicht sind schwierig herzustellen, da es für diese Materialkombination nur unzureichend wirkende coextrudierbare Haftvermittler gibt. Zwar ist PET in hohem Maße temperaturbeständig, bedarf aber zum Erreichen einer ausreichend hohen Gleitfähigkeit in jedem Fall der Zugabe von Gleit- oder Antiblockmitteln. Gegenüber einer außenliegenden Polyamidschicht stellt PET daher keinen Vorteil dar. So finden für den hier vorliegenden Anwendungsfall solche coextrudierten Strukturen keine Verwendung.

Die Gleitfahigkeit sowohl der genannten polyolefinischen Materialien als auch von Polyamid wird nach dem Stand der Technik durch Additive verbessert. Hierzu werden Antiblockmittel in Form fester Partikel verwendet, die teilweise aus der Außenseite der Folie hervortreten und so die effektive Kontaktfläche zum benachbarten Medium verringern. Beispiele sind Siliziumoxid, Calciumcarbonat, Magnesiumsilikat, Aluminiumsilikat, Calciumphosphat und dergleichen. Bevorzugt kommt daraus Siliciumdioxid zum Einsatz. Wirksame Mengen liegen im Bereich von 0,1 bis 2 Gew.-%. Die mittlere Teilchengröße liegt zwischen 1 und 10 µm, wobei hier Teilchen mit kugelförmiger Gestalt besonders geeignet sind. In mehrlagigen Aufbauten werden diese Partikel bevorzugt nur in der äußeren Schicht eingesetzt.

Andere Additive, die die Gleitfähigkeit der Folie, auch in Zusammenwirken mit den genannten festen Partikeln, verbessern, sind die üblicherweise als Gleitmittel bezeichneten höheren aliphatischen Säureamide, höhere aliphatische Säureester, Wachse, Metallseifen sowie Polydimethylsiloxane. Die wirksame Menge an Gleitmittel liegt im Bereich von 0,01 bis 3 Gew.-%, vorzugsweise 0,02 bis 1 Gew.-%. Ein üblicherweise für Polyolefine eingesetztes aliphatisches Säureamid ist Erucasäureamid. Polyamide werden gewöhnlich mit Säureamiden aus höhersubstituierten Aminen ausgerüstet. Üblicherweise wird hier Ethylen-Bisstearylamid verwendet. Die genannten Materialien sind stets nur begrenzt im Polymer aufnahmefähig und lagern sich daher nach einer Verarbeitung zu einer Folie im Laufe der Zeit an den Außenseiten ab. Auf diese Weise wird dort ein gleitfähiger Film gebildet.

Auch durch abgestimmte Dosierung sowohl von Gleit- als auch von Antiblockmitteln läßt sich der oben beschriebene Effekt einer zeitlich vorübergehenden Reduzierung der Gleitfähigkeit einer Folie mit Polyamidaußenseite erfahrungsgemäß nicht eliminieren. Ursächlich ist möglicherweise die Tatsache, daß die oben genannten Gleitmittel mit Polyamid besser verträglich sind und daher langsamer nach außen migrieren und sich so der durch den Tiefzug verdünnte Gleitmittelfilm langsamer regenerieren kann.

Eine wichtige Anforderung an thermoformbare Folien ist jedoch auch die mechanische Festigkeit. Kriterien sind hier neben der Reißfestigkeit, bestimmt nach DIN EN ISO 527, auch die Durchstichfestigkeit. Letztere stellt ein Maß für den Widerstand dar, den eine Folie der langsamen Durchdringung mit einem spitzen Gegenstand, beispielsweise im Packgut enthaltenen Knochensplittern, entgegensetzt. Ein geeignetes Meßverfahren für diese Größe ist im Zusammenhag mit den Beispielen beschrieben.

Polyamid ist im Bereich flexibler thermoformbarer Folien im Hinblick auf die Erzielung einer hohen Reiß- und Durchstichfestigkeit allen bekannten und insbesondere polyolefinischen Materialien deutlich überlegen. Es kann daher auf eine die Folie solchermaßen verstärkende Polyamidschicht nicht verzichtet werden. Bekannte Aufbauten für flexible, tiefziehbare Folien enthalten daher aus diesen Gründen stets Polyamid.

Neben den oben genannten Polymeren ist auch die Stoffklasse der aliphatischen Polyketone seit längerem bekannt. Sie sind streng lineare und alternierende Polymere aus Kohlenmonoxid und zumindest einem ethylenisch ungesättigten Olefin. Fur diese Materialien sind jedoch nur wenige Anwendungen zur Herstellung von Folien bekannt. Offengelegte Anwendungen nutzen ausschließlich die gute Sauerstoffbarriere oder die Hochfrequenzheizbarkeit dieser Materialien aus.

J.G. Bonner und A.K. Powell, *Vortrag Maack Specialty Film* '*96*, beschreiben einen fünfschichtigen Aufbau PP/Haftvermittler/aliphatisches Polyketon/Haftvermittler/PP als beidseitig siegelbare Folie für die Verpackung von Lebensmitteln. Dieser Aufbau zeichnet sich im wesentlichen durch seine gute Sauerstoffbarriere aus. Für den Einsatz auf Tiefziehmaschinen zur Herstellung von Muldenpackungen ist er wegen des symmetrischen Aufbaus mit außenliegender PP-Schicht grundsätzlich ungeeignet.

WO 8607012 beschreibt ein mehrschichtiges Laminat mit wenigstens zwei verschiedenen extrudierbaren Polymeren, wobei zumindest eine Lage ein Polyketon, bevorzugt ein Ethylen/Kohlenmonoxid-Copolymer, enthält und mit einer weiteren, bevorzugt aus einem Halopolymer, bestehenden Schicht, verbunden ist. Diese Folie ist besonders für die Versiegelung durch hochfrequente elektromagnetische Wellen geeignet. Die in dem genannten Aufbau verwendeten Halopolymere wie PVC oder PVDC zeichnen sich zwar durch eine Aufheizbarkeit mit radiofrequenten Wellen aus, sind jedoch aus lebensmittelrechtlichen und ökologischen Gründen für die Lebensmittelverpackung nicht vorteilhaft.

In US 5232786 wird ein mehrschichtiger coextrudierter Aufbau mit mindestens je einem aliphatischen Polyketon und einem Polyamid, Polyvinylchlorid oder Copolyetherester beschrieben. Diese Aufbauten zeichnen sich durch eine geringe Haftung des Verbundes und damit eine verbesserte Trenn- und Recyclierbarkeit aus. Diese Eigenschaft, sowie die mangelnde Versiegelbarkeit eines solchen Verbundes lassen ihn für den Einsatz als hochbeanspruchte Verpackungsfolie auf Tiefziehmaschinen ungeeignet erscheinen.

In US 5077385 wird ein zweischichtiges Laminat beschrieben, in dem eine der Schichten aus einem aliphatischen Polyketon, bevorzugt einem Terpolymer aus Kohlenmonoxid, Ethylen und Propylen, besteht und die andere Schicht durch ein Polypropylen oder Polycarbonat gebildet wird. Das wesentliche Merkmal des beschriebenen Laminats ist die Herstellung des Polyketons aus der Schmelze über eine Abkühlung mit einer Geschwindigkeit von 1°C bis 20°C pro Minute. Auf diese Weise erlangt das Material eine gute Barriere gegen Wasserdampf, Sauerstoff und Kohlendioxid. Die Realisierung eines solchen Abkühlprozesses würde auf Maschinen zur Herstellung einer thermoformbaren Folie zu extrem langen Maschinenverweilzeiten und damit sehr teuren Folien führen. Der genannte mehrschichtige Aufbau ist überdies nicht für eine frühsiegelnde Folie geeignet.

Auch Polymermischungen auf Basis von aliphatischen Polyketonen sind in der Patentliteratur offengelegt. So beschreibt WO 09111470 ein homogenes Gemisch aus einem Ethylen/Vinylalkohol-Copolymerisat und einem Copolymer aus Ethylen und Kohlenmonoxid. Das Blend zeichnet sich durch eine gute Sauerstoffbarriere, Erwärmbarkeit durch hochfrequente Strahlung sowie eine gegenüber dem reinen Copolymer aus Ethylen und Kohlenmonoxid verbesserte Schmelzefestigkeit aus und ist daher u.a. für die Verarbeitung als Blasfolie geeignet. Eine solche Polymermischung und deren Verwendung in ein- oder mehrschichtigen Folien wird ebenfalls in US 04965314 beschrieben. Neben den oben genannten Vorteilen einer Hochfrequenzerwärmbarkeit und einer guten Sauerstoffbarriere zeichnet sich eine Folie auf Basis einer solchen Polymermischung durch eine verbesserte Durchstoßfestigkeit, d.h. einen erhöhten Widerstand gegenüber einer stoßartigen Beanspruchung mit einem stumpfen Objekt, aus.

WO 09606889 und EP 00669374 legen daneben Mischungen eines aliphatischen Polyketons mit einem linearen Polyethylen niedriger Dichte (LLDPE) bzw. einem Polyethylen hoher Dichte (HDPE) offen, die sich durch eine verbesserte Barriere sowohl gegenüber Sauerstoff als auch Wasserdampf und Kohlenwasserstoffen auszeichnen. Aus diesen Gründen werden auch zur Aufnahme von Lebensmitteln geeignete Container und Folien aus diesen Materialien beansprucht. Für die hier vorliegende Anwendung sind solche Mischungen wegen des gegenüber dem reinen Copolymer aus Ethylen und Kohlenmonoxid früheren Erweichens von mit LLDPE oder HDPE versetzten aliphatischen Polyketonen bei Wärmeeinwirkung nicht sinnvoll.

Es stellte sich die Aufgabe, eine flexible Mehrschichtfolie mit guter Maschinengängigkeit auf Tiefziehmaschinen bereitzustellen. Für die gute Maschinengängigkeit soll die Außenseite der thermoformbaren Folie auch in den ersten Minuten nach dem Tiefzug eine ausreichend hohe Gleitfähigkeit aufweisen. Die Folie muß außerdem einseitig unter Temperatureinfluß in möglichst kurzer Zeit gegen eine entsprechende Deckelfolie mit kompatibler Siegelschicht versiegelbar sein. Zusätzlich muß die Folie im Hinblick auf die Anwendung als Packmittel hohe Reiß- und Durchstichfestigkeiten sowie eine kratzfeste Außenseite aufweisen. Darüberhinaus sollte sie sich in wenigen Arbeitsgängen rational fertigen lassen.

Erfindungsgemäß gelang dies durch Bereitstellung einer siegelbaren ungereckten Mehrschichtfolie, bestehend aus einer außenliegenden Schicht (I), mindestens einer polyamidhaltigen Schicht (II), einer wenigstens einlagigen Siegelschicht (III) auf der der Schicht (I) gegenüberliegenden Außenseite (der Siegelseite) der Folie sowie gegebenenfalls weiteren Schichten, wobei die Mehrschichtfolie dadurch gekennzeichnet ist, daß die außenliegende Schicht (I) ein lineares alternierendes Copolymer (1) aus Kohlenmonoxid und wenigstens einem ethylenisch ungesättigten Olefin enthält und die polyamidhaltige Schicht (II) wenigstens 50 Gew -% eines Polyamids enthält.

Das lineare alternierende Copolymer (1) aus Kohlenmonoxid und wenigstens einem ethylenisch ungesättigten Olefin ist vorzugsweise ein Copolymer aus Kohlenmonoxid und einem oder mehreren Olefinen aus der Gruppe umfassend Ethylen und C₃- bis C₁₀-Alkene wie beispielsweise Propylen, 1-Buten, 2-Buten, 1-Penten, 1-Hexen, 1-Octen, 1-Nonen, 1-Decen, in einer besonders bevorzugten Form ein Terpolymer aus Kohlenmonoxid, Ethylen und Propylen und in einer hieraus wiederum besonders bevorzugten Form ein solches Terpolymer aus Kohlenmonoxid, Ethylen und Propylen mit in der Polymerkette statistisch verteilten Monomereinheiten des Ethylen (A) und Propylen (B) ist, in dem das stöchiometrische Verhältnis B/A dieser monomeren Einheiten nicht über 0,5 beträgt.

Die Außenschicht (I) der erfindungsgemäßen Folie kann neben dem linearen alternierenden Copolymer aus Kohlenmonoxid und wenigstens einem ethylenisch ungesättigten Olefin auch weitere thermoplastische Polymere als Mischkomponenten enthalten. Hierfür sind insbesondere Ethylen/Vinylalkohol-Copolymerisate und/oder Polyamid geeignet.

Daneben kann das lineare alternierende Copolymer aus Kohlenmonoxid und wenigstens einem ethylenisch ungesättigten Olefin auch konventionelle Zusätze enthalten. Beispiele hierfür sind Antistatika, Gleitmittel, Antiblockmittel, Pigmente oder andere feste Füllstoffe jeglicher Art.

Die polyamidhaltige Schicht (II) enthält bevorzugt Polyamid 6, Polyamid 10, Polyamid 12, Polyamid 66, Polyamid 610, Polyamid 6I, Polyamid 6/12, Polyamid 6/66, Polyamid 6I/6T, Polyamid MXD6, Polyamid 6/6I, Polyamid 6/6T oder Mischungen daraus. In besonders bevorzugter Form werden Mischungen aus den genannten Polyamiden mit mindestens 80 Gew -% Polyamid 6, bezogen auf das Gesamtgewicht der Mischung, eingesetzt.

Die polyamidhaltige Schicht (II) der erfindungsgemäßen Folie kann daneben auch übliche Additive wie Gleitmittel, Pigmente oder andere feste Füllstoffe jeglicher Art enthalten. Besonders geeignet sind feste anorganische oder organische Partikel im Größenbereich unterhalb von 1 µm zur Steuerung der Steifigkeit und Sauerstoffdurchlässigkeit der polyamidischen Schicht (II).

Die Siegelschicht (III) besteht aus den üblicherweise als Siegelmedium verwendeten Polymeren. Dies sind beispielsweise Polyethylen (LDPE und HDPE) oder Polypropylen (PP). Daneben können Ethylen/α-Olefin-Copolymerisate (LLDPE) verwendet werden. Sie können entweder mit konventionellen Ziegler-Natta-Katalysatoren oder mit Metallocen-Katalysatoren hergestellt werden. Daneben können andere Copolymerisate des Ethylens wie Ethylen/Propylen-Copolymere, Ethylen/Vinylacetat-Copolymere (EVA), Ethylen-Copolymerisate mit ungesättigten Estern (EBA), Ethylen-Copolymerisate mit ungesattigten Carbonsäuren (EAA, EMAA) und Ionomere zum Einsatz kommen

Zur Erzielung besonderer Eigenschaften können die oben genannten in die Siegelschicht Eingang findenden Polymere auch in Form von Mischungen untereinander verwendet werden.

Die erfindungsgemäße Folie kann auch eine mehrschichtig ausgeführte Siegelschicht enthalten. So können die oben genannten Stoffe etwa zur Kostenoptimierung in einer solchen Weise angeordnet sein, daß die auf der Innenseite der Folie liegende, dem Produkt zugewandte, Schicht sich durch einen besonders frühen Siegelbeginn auszeichnet und die sich zur Folienmitte daran anschließende Schicht erst bei höheren Temperaturen schmilzt, jedoch dafür kostengünstiger ist oder durch eine höhere Schmelzefestigkeit die Produzierbarkeit einer solchen Siegelschicht als Blasfolie erst ermöglicht. Es können auch haftvermittelnde Polymere aus den genannten Stoffgruppen oder auf deren Basis hergestellte, etwa mit Anhydrid durch Propfung modifizierte, Polymere zum Einsatz kommen. Beispiele für solche Aufbauten sind die Schichtenfolgen LDPE/EVA oder LDPE/EAA/Ionomer.

Alle oder einzelne Lagen der Siegelschicht können zusätzlich mit Additiven ausgestattet sein, die die Funktionalität der Folie verbessern. Beispiele sind als Antiblockmittel bekannte feste anorganische Partikel, die aus der äußeren Oberfläche der Siegelschicht hervortreten und auf diese Weise das Gleitverhalten der Folie verbessern. Hierfür geeignet sind Siliziumoxid, Calciumcarbonat, Magnesiumsilikat, Aluminiumsilikat, Calciumphosphat und dergleichen. Bevorzugt kommt daraus Siliciumdioxid zum Einsatz. Wirksame Mengen liegen im Bereich von 0,1 bis 2 Gew.-%, vorzugsweise 0,1 bis 0,8 Gew.-%. Die mittlere Teilchengröße liegt zwischen 1 und 10 µm, bevorzugt 2 und 5 µm, wobei hier Teilchen mit kugelförmiger Gestalt besonders geeignet sind. In mehrlagigen Siegelschichten werden diese Partikel bevorzugt nur in der äußeren Schicht eingesetzt.

Andere Additive, die die Gleitfahigkeit der Folie, auch in Zusammenwirken mit den genannten festen Partikeln, verbessern, sind die üblicherweise als Gleitmittel bezeichneten höheren aliphatischen Säureamide, höhere aliphatische Saureester, Wachse, Metallseifen sowie Polydimethylsiloxane. Die wirksame Menge an Gleitmittel liegt im Bereich von 0,01 bis 3 Gew.-%, vorzugsweise 0,02 bis 1 Gew.-% Besonders geeignet ist der Zusatz von höheren aliphatischen Säureamiden im Bereich von 0,01 bis 0,25 Gew.-%. Ein insbesondere für die oben genannten, in der Siegelschicht verwendeten, Polymere geeignetes aliphatisches Säureamid ist Erucasäureamid.

Die erfindungsgemäße Folie kann die außenliegende Schicht (I), eine oder mehrere polyamidhaltige Schichten (II) und/oder gegebenenfalls eine Sperrschicht (V) durch eine oder mehrere, gegebenenfalls verschiedenartig zusammengesetzte, haftvermittelnde Schichten (IV) miteinander verbunden enthalten. In einer bevorzugten Form enthält die erfindungsgemäße Folie eine direkte Schichtenabfolge aus der außenliegenden Schicht (I) und einer polyamidhaltigen Schicht (II), die durch Coextrusion, gegebenenfalls mit einer oder mehreren weiteren Schichten auf der der Schicht (I) abgewandten Seite der polyamidhaltigen Schicht (II) hergestellt wird. Besonders geeignet ist daneben eine wie oben beschrieben durch Coextrusion hergestellte direkte Schichtenfolge aus der außenliegenden Schicht (I) und einer ein Ethylen/Vinylalkohol-Copolymerisat (EVOH) enthaltenden Schicht (V) oder/und eine direkte Schichtenfolge aus einer polyamidhaltigen Schicht (II) und einer ein Ethylen/Vinylalkohol-Copolymerisat (EVOH) enthaltenden Schicht (V) sowie Kombinationen aus den genannten Schichtenfolgen. Bevorzugte Ausführungen sind die Schichtenabfolgen a/b/..., a/b/a/..., ./b/c/b/..., a/c/b/..., a/c/a/b/..., a/b/c/b/... oder a/b/c/b/a/..., wobei a eine Schicht aus einem linearen alternierenden Copolymer aus Kohlenmonoxid und wenigstens einem ethylenisch ungesättigten Olefin, b eine polyamidhaltige Schicht und c eine EVOH-haltige Schicht bedeuten.

Die oben als a, b und c bezeichneten Schichten benötigen zur Verbindung mit der Siegelschicht (III) üblicherweise eine haftvermittelnde Schicht (IV). Dabei besteht die Möglichkeit, alle Schichten gemeinsam zu coextrudieren, d.h. die Polymere aller Schichten als Schmelzeströme zusammenzuführen und in geschmolzener Form durch eine gemeinsame Düse strömen zu lassen. Für dieses Verfahren wird ein extrudierbarer Haftvermittler gewählt. Als solche werden bevorzugt modifizierte Polyolefine eingesetzt. In bevorzugter Form sind dies Polyolefine mit Carboxylgruppen, wie z.B. Polyethylen, Polypropylen, Ethylen/a-Olefin-Copolymerisate oder Ethylen/Vinylacetat-Copolymerisate, die mit mindestens einem Monomer aus der Gruppe der α,β-einfach ungesättigten Dicarbonsäuren, wie beispielsweise Maleinsäure, Fumarsäure, Itaconsäure oder deren Säureanhydride, Säureester, Säureamide und Säureimide, gepfropft sind. Als extrudierbare Haftvermittler können daneben Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate, die mit einem Monomer der genannten ungesättigten Säuren pfropfpolymerisiert sind, zum Einsatz kommen. Besonders bevorzugt sind daraus Polyolefine wie Ethylen/α-Olefin-Copolymerisate mit aufgepfropftem a,β-einfach ungesättigten Dicarbonsäureanhydrid, insbesondere Maleinsäureanhydrid. Der extrudierbare Haftvermittler der erfindungsgemäßen Folie kann als Verbinder zwischen einer oben als a kenntlich gemachten, d.h. einer in der Zusammensetzung der Außenschicht (I) entsprechenden, inneren Schicht (VI) und der Siegelschicht (III) auch ein Polymer aus der Gruppe der linearen alternierenden Copolymere aus Kohlenmonoxid und wenigstens einem ethylenisch ungesättigten Olefin, in einer bevorzugten Form ein Copolymer aus Kohlenmonoxid und einem oder mehreren Olefinen aus der Gruppe umfassend Ethylen und C₃- bis C₁₀-Alkene wie beispielsweise Propylen, 1-Buten, 2-Buten, 1-Penten, 1-Hexen, 1-Octen, 1-Nonen, 1-Decen, in einer besonders bevorzugten Form ein Terpolymer aus Kohlenmonoxid, Ethylen und Propylen und in einer hieraus wiederum besonders bevorzugten Form ein solches Terpolymer aus Kohlenmonoxid, Ethylen und Propylen mit in der Polymerkette statistisch verteilten Monomereinheiten des Ethylen (A) und Propylen (B) sein, in dem das stöchiometrische Verhältnis B/A dieser monomeren Einheiten in dieser besonders bevorzugten Form größer ist als Verhältnis B/A der monomeren Einheiten im Polymer der Schicht (VI).

Die erfindungsgemaße Folie läßt sich auch durch Extrusionsbeschichtung, das heißt dem Auftrag der Siegelschicht in geschmolzenem Zustand auf eine vorgefertigte, mindestens die Schichten (I) und (II) enthaltende Schichtenfolge, die auf der zu beschichtenden Seite bereits mit dem oben beschriebenen coextrudierten Haftvermittler oder einem nach der Extrusion aufgetragenen Primer versehen ist, herstellen.

Daneben kann die erfindungsgemäße Folie durch separate Vorfertigung eines mindestens die Schichten (I) und (II) enthaltenden Tragerfilms und der Siegelschicht hergestellt werden. Als haftvermittelnde Schicht kommt in solchen Fällen ein etwa mit einem Walzenauftragswerk entweder auf den Trägerfilm oder auf die Siegelschicht aufzubringender Kaschierklebstoff zum Einsatz. Solche Klebstoffe sind üblicherweise auf Polyurethanen oder Polyesterurethanen basierende Systeme.

Durch den Einsatz der erfindungsgemäßen Schichtenfolge gelingt es, eine zu einer flexiblen, thermogeformten Mulde verarbeitbare Folie bereitzustellen, die zur schnellen Versiegelung gegen eine Deckelfolie mit hohen Siegelwerkzeugtemperaturen beaufschlagt werden kann. Es war nicht zu erwarten, daß die Folie auch eine hervorragende Gleitfähigkeit gegen sich selbst und gegen Metall unmittelbar nach dem Tiefzug aufweist. Auch die Durchstichfestigkeit (Durchsticharbeit) und Kratzfestigkeit ist gegenüber Folien mit polyolefinischen Außenschichten deutlich erhöht.

Gegenstand der Erfindung ist daher auch die Verwendung der Folie als Muldenfolie zur Herstellung von tiefgezogenen Verpackungen auf Thermoform-Füll-Siegel-Maschinen.

Für den Erfinder ebenfalls überraschend läßt sich die erfindungsgemäße Folie ohne zusätzliche haftvermittelnde Schichten zwischen der erfindungsgemäßen Außenschicht und einer polyamidhaltigen Kernschicht durch Coextrusion auf üblichen Maschinen zur Herstellung von mehrschichtigen Folien fertigen. Ein weiterer Vorteil der erfindungsgemäßen Folie ist die zwischen den Schichten unerwartet gleichförmige Einschnürung der Schmelzefahne und damit die gute Breitenausnutzung eines als Flachfilm coextrudierten Verbundes.

### Beispiele

### Beispiel 1

Ein lineares alternierendes Terpolymer aus Kohlenmonoxid sowie Ethylen und 5 Gew.-% Propylen, bezogen auf das gesamte Polymergewicht, mit einem Schmelzpunkt von 220°C wurde in einem üblichen Dreizonenextruder aufgeschmolzen und auf eine Temperatur von 250°C gebracht. Das Terpolymer hat einen Schmelzflußindex (MFR), gemessen nach ISO 1133 bei 240°C und 2,16 kg Auflagegewicht, von 5 g/10 min. In einem anderen Extruder wurde ein Polyamid 6 mit einem Kristallitschmelzpunkt von 220°C und einer relativen Viskosität in 98%-iger Schwefelsäure von 3,6 ebenfalls aufgeschmolzen und auf eine Temperatur von 260°C erwärmt. Das Polyamid enthält 600 ppm Ethylen-Bisstearylamid. Die beiden Schmelzeströme wurden dann in einem Adapter zusammengeführt und gemeinsam durch eine Breitschlitzdüse extrudiert. Anschließend wurde die Schmelzefahne als Flachfolie ausgezogen, indem sie kontinuierlich durch eine auf 260°C temperierte Breitschlitzdüse mit der PA-Seite auf eine rotierende Gießwalze mit einer Oberflächentemperatur von 100°C aufgebracht wurde. Die so gewonnene Folie weist eine 10 µm dicke Schicht des linearen alternierenden Terpolymers aus Kohlenmonoxid sowie Ethylen und 5 Gew.-% Propylen und eine 40 µm dicke Schicht des Polyamid 6 auf und wurde anschließend auf Raumtemperatur abgekühlt, wieder auf 60°C erwärmt und in diesem Zustand mit einem lösemittelfreien Klebstoff, bestehend aus einem Polyol und einem Diisocyanat in einem für eine Vernetzung zu einem Polyurethan geeigneten stöchiometrischen Verhältnis, per Walzenauftrag mit einem Flächengewicht von 2 g/m² beschichtet. Der klebstoffbeschichteten Seite dieses Films wurde anschließend eine weitere, in einem vorhergegangenen Arbeitsgang hergestellte, Folie, die Siegelschicht, zugeführt, so daß beide Folien unter Druck und ebenfalls bei 60°C in einem Walzenspalt zusammengefügt werden konnten. Die Siegelschicht bestand aus einer Mischung mit 85 Gew.-% eines Ethylen/Buten-Copolymerisat (LLDPE) mit einer Dichte von 919 g/cm³, einem Schmelzpunkt von 117°C sowie einem MFR von 0,7 g/10min bei 190°C und 2,16 kg und 15 Gewichts-% eines LDPE mit einer Dichte von 923 g/cm³, einem Schmelzpunkt von 111°C sowie einem MFR von 2 g/10min bei 190°C und 2,16 kg. Das LLDPE enthält 500 ppm Erucasäureamid.

### Beispiel 2

Das in Beispiel 1 genannte Terpolymer aus Kohlenmonoxid, Ethylen und Propylen (Polyketon) wurde in einem Extruder aufgeschmolzen und bis zu einer Temperatur von 250°C erwärmt. In weiteren Extrudern wurden getrennt jeweils das Polyamid aus Beispiel 1, ein mit Maleinsäureanhydrid durch Propfung modifiziertes Ethylen/Buten-Copolymerisat (LLDPE) als Haftvermittler mit einer Dichte von 910 g/cm³ und einem MFR von 4,4 g/10 min bei 190°C und 2,16 kg und einem Schmelzpunkt von 124°C, ein LDPE mit einer Dichte von 920 g/cm³, einem Schmelzpunkt von 108°C und einem MFR von 1 g/10 min bei 190°C und 2,16 kg aufgeschmolzen und auf eine Temperatur von 250°C erwärmt. Die Schmelzeströme wurden dann in einer gemeinsamen Ringdüse zusammengeführt und zu einer schlauchförmigen Folie extrudiert. Der Folienschlauch wurde mit üblichen in der Blasfolientechnik verwendeten Methoden zu einer flachen Folie weiterverarbeitet. Die Folie hat die Schichtenfolge Polyketon / Haftvermittler / PA 6 / Haftvermittler / LDPE, wobei die Dicken in der genannten Reihenfolge 30, 10, 30, 10 und 80 um betragen.

### Vergleichsbeispiel 3

Das Polyamid 6 aus Beispiel 1 mit zusätzlich 1000 ppm eines Siliziumoxids der Teilchengröße 15 µm wurde als einschichtiger Flachfilm analog der in Beispiel 1 beschriebenen Weise in einer Dicke von 50 µm gefertigt und in der ebenfalls in Beispiel 1 skizzierten Weise gegen die in Beispiel 1 beschriebene 100 µm dicke Siegelschicht kaschiert.

### Vergleichsbeispiel 4

Der in Beispiel 2 beschriebene Aufbau wurde in gleicher Weise, aber mit einem Ethylen/Buten-Copolymerisat (LLDPE) mit einer Dichte von 919 g/cm³, einem Schmelzpunkt von 124°C sowie einem MFR von 4,4 g/10min bei 190°C und 2,16 kg ausgerüstet mit 500 ppm Erucasäureamid und 1000 ppm Siliziumoxid der mittleren Teilchengröße 15 µm anstatt des Terpolymers aus Kohlenmonoxid, Ethylen und Propylen (Polyketon) in der Außenschicht hergestellt. Die Folie hat die Schichtenfolge LLDPE / Haftvermittler / PA 6 / Haftvermittler / LDPE, wobei die Dicken in der genannten Reihenfolge 30, 10, 30, 10 und 80 µm betragen.

An den gefertigten Mustern wurden die folgenden physikalischen Eigenschaften wie folgt gemessen:
- Das Reibungsverhalten nach DIN 53 375. Dabei werden Reibzahlen für die Haft- und Gleitreibung für die Materialpaarung Folie/Folie wie folgt ermitttelt: 2 staub- und fehlerfreie Probestreifen von 200 x 75 mm werden in Längsrichtung der Folie entnommen. Ein Streifen wird mit der zu prüfenden Seite nach oben auf einen Prüftisch aus geschliffenem Stahl gespannt, der andere mit der zu prüfenden Seite nach unten darübergelegt und an einem Mitnehmer befestigt. Ein Reibklotz der Masse 200 g mit einer Prüffläche von 64 x 63 mm, plan geschliffen und mit Gummi bespannt, wird stoßfrei und ohne zusätzliche Druckanwendung so auf die Probekörper gelegt, daß er während des gesamten Prüfwegs von 60 mm mit der gesamten Pruffläche auf beiden Probekörpern liegt. Unmittelbar nach Auflegen wird die Prüfung mit einer Abzugsgeschwindigkeit von 100 mm/min gestartet, die mittels Zeitrelais so verzögert ist, daß nach 15 Sekunden ein Kraftanstieg beginnt. Der Haftreibkoeffizient ist dabei das Verhältnis der maximalen auf die oben beschriebene Weise gemessenen Kraft F_{R}, die noch in einem Bereich liegt, in dem ein lineares Verhältnis zwischen Vorzug des Reibklotzes und durch Reibung auf ihn übertragener Kraft herrscht, zu der Gewichtskraft des Reibklotzes. Der Gleitreibungskoeffizient ist das Verhältnis der auf den Beginn der Bewegung extrapolierten Kraft F_{R} zur Gewichtskraft des Reibklotzes. Für die Materialpaarung Folie/Metall erfolgt die Bestimmung der Gleit- und Haftreibkoeffizienten analog. Es wird lediglich der untere Prüfstreifen weggelassen, so daß der obere Prüfstreifen gegen die geschliffene Stahlplatte des Prüftisches reibt. Diese Prüfungen wurden sowohl für die Folien im unbeanspruchten Zustand durchgefuhrt, wobei stets die Gleitfähigkeit der Außenseite bestimmt wurde, als auch nach einer vorherigen Langsdehnung der Folie Dazu wurde ein ebenfalls 200 x 75 mm messender Probestreifen entnommen und auf den längeren Querseiten in 50 mm voneinander entfernte durchgehende Halterungen eingespannt. Die Halterungen wurden dann mit einer Geschwindigkeit von 100 mm / min auf eine Länge von 150 mm auseinandergefahren, die gedehnte Probe entnommen und erneut auf 200 x 75 mm zurechtgeschnitten. Die so gewonnenen Proben wurden wie oben beschrieben geprüft. Der Start der Messung erfolgte dabei stets 2 min nach dem Ende der Vordehnung. Sämtliche Untersuchungsschritte wurden bei 23°C und 50% relativer Luftfeuchtigeit an zuvor drei Tage diesem Klima ausgesetzten Folien vorgenommen. Zum Vergleich wurden der Haftreibkoeffizient zwischen Folie und Folie als Maß für den Widerstand gegenuber dem Einpacken in eine Transportverpackung sowie der Gleitreibkoeffizient Folie / Metall als Maß für den Widerstand gegenüber einem Abrutschen auf einer Metallflache herangezogen. Die Prüfungen wurden jeweils an drei Mustern durchgeführt und die Ergebnisse gemittelt.
- Die Durchstichfestigkeit als die zum Durchstechen einer membranartig aufgespannten Folie mit einem spitzen Prüfdorn von der Siegelseite aus notwendige Kraft, der notwendige Weg sowie die notwendige Arbeit. Dabei ist die Durchsticharbeit für die Beurteilung der Festigkeit gegenüber spitzen Gegenständen in der Praxis erfahrungsgemäß am besten geeignet. Die Messung erfolgt mit einer elektronischen Zugprüfmaschine der Klasse 1 nach DIN 51 221 mit einer Prüfgeschwindigkeit von 100 mm/min. Dazu werden aus der Folie kreisförmige Muster mit einem Durchmesser von 80 mm entnommen und membranartig in die einen Durchmesser von 50 mm aufweisende Probenhalterung des Prüfgerätes eingespannt Der Prüfdorn ist aus Metall gefertigt und hat einen Durchmesser von 2 mm. An seiner Spitze verjüngt er sich über eine Länge von 5 mm auf einen Durchmesser von 1 mm, wobei der vordere Teil mit einem Radius von 0,5 mm abgerundet ist. Durchstichkraft und Durchstichweg ist die bei Versagen der Folie erreichte Auslenkung bzw. Kraft des Prufdorns. Die Durchsticharbeit ergibt sich durch Integration der auf den Prufdorn wirkenden Kraft über den von ihm zurückgelegten Weg. Samtliche Untersuchungsschritte wurden bei 23°C und 50% relativer Luftfeuchtigeit an zuvor drei Tage diesem Klima ausgesetzten Folien vorgenommen. Die Prüfungen wurden jeweils an drei Mustern durchgeführt und die Ergebnisse gemittelt.
- Die Kratzfestigkeit wurde qualitativ bestimmt. Dazu wurde mit der senkrecht gestellten Klinge eines normal scharfen Messers quer zur Richtung der Klinge über die Folienaußenseite gefahren und die so hinterlassene Spur den Kategorien "deutlich", "schwach" oder "nicht erkennbar" zugeordnet. Dieser Test wurde mit einem Fingernagel sowie einem Zugprüfkörper aus einem Polypropylen-Homopolymer mit scharfkantigen Ecken wiederholt.

Die Ergebnisse sowie die Temperaturbeständigkeit der Folienaußenseite in Form ihres Schmelzpunkts nach ASTM 3418 sind in untenstehender Tabelle zusammengefaßt:

| Merkmal | Einheit | Beispiel 1 | Beispiel 2 | Vergleichsbeispiel 3 | Vergleichsbeispiel 4 |
|---|---|---|---|---|---|
| Haftreibkoeffizient Folie / Folie unbeansprucht | [-] | 0,12 | 0,14 | 0,19 | 0,15 |
| Gleitreibkoeffizient Folie / Metall unbeansprucht | [-] | 0,16 | 0,18 | 0.24 | 0,28 |
| Haftreibkoeffizient Folie / Folie 2 min nach Dehnung | [-] | 0.15 | 0.19 | 0.83 | 0.16 |
| Gleitreibkoeffizient Folie / Metall 2 min nach Dehnung | [-] | 0,2 | 0,19 | 0,48 | 0,33 |
| Durchstichkraft | [N] | 10,7 | 11,4 | 12,0 | 7,7 |
| Durchstichweg | [mm] | 4,6 | 4,8 | 5,0 | 5,4 |
| Durchsticharbeit | [N cm] | 2,6 | 2,8 | 3.1 | 1,9 |
| Kratzneigung gegenüber Messer | keine | nicht erkennbar | nicht erkennbar | nicht erkennbar | deutlich |
| Kratzneigung gegenüber Polypropylen | keine | nicht erkennbar | nicht erkennbar | nicht erkennbar | deutlich |
| Kratzneigung gegenüber Fingernagel | keine | nicht erkennbar | nicht erkennbar | nicht erkennbar | schwach |
| Schmelzpunkt der Außenschicht | [°C] | 220 | 220 | 220 | 124 |

## Patentansprüche

1. Mehrschichtfolie, bestehend aus einer außenliegenden Schicht (I), mindestens einer polyamidhaltigen Schicht (II), einer wenigstens einlagigen Siegelschicht (III) auf der der Schicht (I) gegenüberliegenden Außenseite (der Siegelseite) der Folie sowie gegebenenfalls weiteren Schichten, wobei die Mehrschichtfolie **dadurch gekennzeichnet** ist, daß die außenliegende Schicht (I) ein lineares alternierendes Copolymer (1) aus Kohlenmonoxid und wenigstens einem ethylenisch ungesättigten Olefin enthält und die polyamidhaltige Schicht (II) wenigstens 50 Gew.-% eines Polyamids enthält.

2. Folie nach Anspruch 1 mit einem Copolymer (1) aus Kohlenmonoxid und einem oder mehreren Olefinen aus der Gruppe umfassend Ethylen und C₃- bis C₁₀-Alkene wie beispielsweise Propylen, 1-Buten, 2-Buten, 1-Penten, 1-Hexen, 1-Octen, 1-Nonen, 1-Decen.

3. Folie nach Anspruch 2, wobei das Copolymer (1) ein Terpolymer (2) aus Kohlenmonoxid, Ethylen und Propylen ist.

4. Folie nach Anspruch 3 mit einem Terpolymer (2) aus Kohlenmonoxid, Ethylen und Propylen mit in der Polymerkette statistisch verteilten Monomereinheiten des Ethylen (A) und Propylen (B), in dem das stöchiometrische Verhältnis B/A dieser monomeren Einheiten nicht über 0,5 beträgt.

5. Folie nach einem der Ansprüche 1 bis 4, wobei die polyamidhaltige Schicht (II) zu wenigstens 50 Gew.-%, bezogen auf das Gewicht der Schicht (II) wenigstens ein Polyamid aus der Gruppe Polyamid 6, Polyamid 10, Polyamid 12, Polyamid 66, Polyamid 610, Polyamid 61, Polyamid 6/12, Polyamid 6/66, Polyamid 6I/6T, Polyamid MXD6, Polyamid 6/6I, Polyamid 6/6T oder Mischungen daraus enthält.

6. Folie nach Anspruch 5, wobei die polyamidhaltige Schicht (II) zu wenigstens 80 Gew.-%, bezogen auf das Gewicht der Schicht (II) wenigstens ein Polyamid aus der Gruppe Polyamid 6, Polyamid 10, Polyamid 12, Polyamid 66, Polyamid 610, Polyamid 6I, Polyamid 6/12, Polyamid 6/66, Polyamid 6I/6T, Polyamid MXD6, Polyamid 6/6I, Polyamid 6/6T oder Mischungen daraus enthält.

7. Folie nach einem der Ansprüche 1 bis 6, wobei das in der polyamidhaltigen Schicht (II) enthaltene Polyamid mindestens 80 Gew.-% Polyamid 6, bezogen auf das Gesamtgewicht dieses Polyamids, enthält.

8. Folie nach einem der Ansprüche 1 bis 7, wobei die polyamidhaltige Schicht II) zu wenigstens 80 Gew.-%, bezogen auf das Gewicht der Schicht (II), Polyamid 6 enthält.

9. Folie nach einem der Ansprüche 1 bis 8, wobei die polyamidhaltige Schicht (II) neben Polyamid kein weiteres Polymer enthält.

10. Folie nach einem der Ansprüche 1 bis 9, wobei die Folie zusätzlich mindestens eine ein Ethylen/Vinylalkohol-Copolymerisat (EVOH) enthaltende Schicht (V) enthält.

11. Folie nach Anspruch 10, wobei wenigstens eine Schicht (V) zu mindestens 50 Gew:-%, bezogen auf das Gesamtgewicht dieser Schicht, ein Ethylen/Vinylalkohol-Copolymerisat (EVOH) enthält.

12. Folie nach einem der Ansprüche 1 bis 11, wobei die außenliegende Schicht (I) ohne weitere Verbindungsschicht direkt neben einer polyamidhaltigen Schicht (II) liegt.

13. Folie nach Anspruch 12, wobei eine polyamidhaltige Schicht (II) ohne weitere Verbindungsschichten direkt zwischen der außenliegenden Schicht (I) und einer weiteren Schicht (VII) liegt, die ein lineares alternierendes Copolymer aus Kohlenmonoxid und wenigstens einem ethylenisch ungesättigten Olefin enthält.

14. Folie nach Anspruch 13, wobei die Schichten (I) und (VII) das gleiche lineare alternierende Copolymer aus Kohlenmonoxid und wenigstens einem ethylenisch ungesättigten Olefin enthalten.

15. Folie nach einem der Ansprüche 1 bis 11, wobei die außenliegende Schicht (I) ohne weitere Verbindungsschicht direkt neben einer ein Ethylen/Vinylalkohol-Copolymerisat (EVOH) enthaltenden Schicht (V) liegt.

16. Folie nach einem der Ansprüche 1 bis 11, die an der der Siegelseite abgewandten Außenseite die Schichtenabfolgen a/b/a, a/c/b, a/c/a/b, a/b/c/b oder a/b/c/b/a und/oder im Folieninneren die Schichtenfolge b/c/b, enthält, wobei a eine Schicht aus einem linearen alternierenden Copolymer aus Kohlenmonoxid und wenigstens einem ethylenisch ungesättigten Olefin, b eine polyamidhaltige Schicht und c eine EVOH-haltige Schicht bedeuten.

17. Folie nach einem der Ansprüche 1 bis 16, wobei die Siegelschicht (III) aus mindestens einer Schicht besteht, die jeweils pro Schicht ein Polymer oder eine Mischung von Polymeren aus der Gruppe der Polyethylene (LDPE und HDPE), der Ethylen/α-Olefin-Copolymerisate (LLDPE), hergestellt mit konventionellen Ziegler-Natta-Katalysatoren bzw. mit Metallocen-Katalysatoren, anderer Copolymerisate des Ethylens wie Ethylen/Propylen-Copolymere, Ethylen/Vinylacetat-Copolymere (EVA), Ethylen-Copolymerisate mit ungesättigten Estern (EBA), Copolymerisate von Ethylen mit α,β-einfach ungesättigten Dicarbonsäuren, wie Acrylsäure oder Methacrylsäure, deren Metallsalze mit Zink oder Natrium und deren Alkyl(C₁-C₄)ester sowie gegebenenfalls Zusätze wie Siliziumoxid, Calciumcarbonat, Magnesiumsilikat, Aluminiumsilikat, Calciumphosphat, höhere aliphatische Säureamide, höhere aliphatische Säureester, Wachse, Metallseifen und/oder Polydimethylsiloxane enthält und/oder Polyolefine, wie z.B. Polyethylen, Polypropylen, Ethylen/α-Olefin-Copolymerisate, oder Copolymerisate von Ethylen mit Vinylacetat oder α,β-einfach ungesättigten Dicarbonsäuren, wie Acrylsäure oder Methacrylsäure, die mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden gepfropft sind, enthält.

18. Folie nach einem der Ansprüche 1 bis 17, die eine oder mehrere haftvermittelnde Schichten (IV) enthält, die ein Polyolefin, wie z.B. Polyethylen, Polypropylen oder Ethylen/α-Olefin-Copolymerisat, oder ein Ethylen/Vinylacetat-Copolymerisat enthalten, das mit mindestens einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden gepfropft ist, und/oder Copolymerisate von Ethylen mit α,β-einfach ungesättigten Dicarbonsäuren, wie Acrylsäure, Methacrylsäure und/oder deren Metallsalze mit Zink oder Natrium und/oder deren Alkyl(C₁-C₄)ester oder entsprechende Pfropfpolymere auf Polyolefine wie z.B. Polyethylen, Polypropylen oder Ethylen/α-Olefin-Copolymerisate enthalten, die mit einem Monomer aus der Gruppe der α,β-einfach ungesättigten Dicarbonsäuren, wie beispielsweise Maleinsäure, Fumarsäure, Itaconsäure oder deren Säureanhydriden, Säureestern, Säureamiden und Säureimiden pfropfpolymerisiert sind.

19. Folie nach Anspruch 18, wobei wenigstens eine haftvermittelnde Schicht (IV) ein Ethylen/α-Olefin-Copolymerisat mit aufgepfropftem α,β-einfach ungesättigten Dicarbonsäureanhydrid enthält.

20. Folie nach Anspruch 19, wobei wenigstens eine haftvermittelnde Schicht (IV) ein Ethylen/α-Olefin-Copolymerisat mit aufgepfropftem Maleinsäureanhydrid enthält.

21. Folie nach einem der Ansprüche 1 bis 20, wobei wenigstens eine haftvermittelnde Schicht ein Polymer aus der Gruppe der Polyurethane, Polyesterurethane oder Polyacrylate enthält.

22. Folie nach einem der Ansprüche 18 bis 21, wobei eine haftvermittelnde Schicht die außenliegende Schicht (I) und eine polyamidhaltige Schicht (II) miteinander verbindet.

23. Folie nach einem der Ansprüche 18 bis 21, wobei eine haftvermittelnde Schicht die Siegelschicht (III) und eine polyamidhaltige Schicht (II) miteinander verbindet.

24. Folie nach einem der Ansprüche 1 bis 23, wobei die außenliegende Schicht (I) und wenigstens eine polyamidhaltige Schicht (II) durch Coextrusion gefertigt worden sind.

25. Verwendung der Folie nach einem der Ansprüche 1 bis 24 zur Herstellung von allseits geschlossenen Containern.

26. Verwendung der Folie nach einem der Ansprüche 1 bis 24 als Muldenfolie auf Form-Füll-Siegel-Maschinen zur Herstellung von durch Versiegelung geschlossenen thermogeformten Containern zusammen mit einer Deckelfolie.

27. Verwendung der Folie nach einem der Ansprüche 1 bis 24 zur Verpackung von Lebensmitteln.

## Claims

1. Multi-layer film consisting of an outer layer (I), at least one polyamide-containing layer (II), a sealing layer (III) produced as at least a single layer on the outer side of the film opposite to layer (I) (the sealing side) and optionally other layers, whereby the multi-layer film is **characterised in that** the outer layer (I) contains a linear alternating copolymer (1) consisting of carbon monoxide and at least one ethylenically unsaturated olefin and the polyamide-containing layer (II) contains at least 50 wt.% of a polyamide.

2. Film according to claim 1 with a copolymer (1) consisting of carbon monoxide and one or more olefins from the group comprising ethylene and C₃ to C₁₀ alkenes, such as e.g. propylene, 1-butene, 2-butene, 1-pentene, 1-hexene, 1-octene, 1-nonene, 1-decene.

3. Film according to claim 2, whereby the copolymer (1) is a terpolymer (2) consisting of carbon monoxide, ethylene and propylene.

4. Film according to claim 3 with a terpolymer (2) consisting of carbon monoxide, ethylene and propylene with monomer units of the ethylene (A) and propylene (B) randomly distributed in the polymer chain, the stoichiometric ratio B/A of these monomer units in the terpolymer being no greater than 0.5.

5. Film according to one of claims 1 to 4, whereby the polyamide-containing layer (II) contains at least 50 wt.%, relative to the weight of layer (II), of at least one polyamide from the group polyamide 6, polyamide 10, polyamide 12, polyamide 66, polyamide 610, polyamide 6I, polyamide 6/12, polyamide 6/66, polyamide 6I/6T, polyamide MXD6, polyamide 6/6I, polyamide 6/6T or mixtures thereof.

6. Film according to claim 5, whereby the polyamide-containing layer (II) contains at least 80 wt.%, relative to the weight of layer (II), of at least one polyamide from the group polyamide 6, polyamide 10, polyamide 12, polyamide 66, polyamide 610, polyamide 6I, polyamide 6/12, polyamide 6/66, polyamide 6I/6T, polyamide MXD6, polyamide 6/6I, polyamide 6/6T or mixtures thereof.

7. Film according to one of claims 1 to 6, whereby the polyamide contained in the polyamide-containing layer (II) contains at least 80 wt.% of polyamide 6, relative to the total weight of this polyamide.

8. Film according to one of claims 1 to 7, whereby the polyamide-containing layer (II) contains at least 80 wt.%, relative to the weight of layer (II), of polyamide 6.

9. Film according to one of claims 1 to 8, whereby the polyamide-containing layer (II) contains no other polymer besides polyamide.

10. Film according to one of claims 1 to 9, whereby the film additionally contains at least one layer (V) containing an ethylene/vinyl alcohol copolymer (EVOH).

11. Film according to claim 10, whereby at least one layer (V) contains at least 50 wt.%, relative to the total weight of this layer, of an ethylene/vinyl alcohol copolymer (EVOH).

12. Film according to one of claims 1 to 11, whereby the outer layer (I) lies directly adjacent to a polyamide-containing layer (II) with no further connecting layer.

13. Film according to claim 12, whereby a polyamide-containing layer (II) with no further connecting layers lies directly between the outer layer (I) and a further layer (VII) containing a linear alternating copolymer consisting of carbon monoxide and at least one ethylenically unsaturated olefin.

14. Film according to claim 13, whereby layers (I) and (VII) contain the same linear alternating copolymer consisting of carbon monoxide and at least one ethylenically unsaturated olefin.

15. Film according to one of claims 1 to 11, whereby the outer layer (I) with no further connecting layer lies directly adjacent to a layer (V) containing an ethylene/vinyl alcohol copolymer (EVOH).

16. Film according to one of claims 1 to 11, containing the layer sequences a/b/a, a/c/b, a/c/a/b, a/b/c/b or a/b/c/b/a on the outer-side facing away from the sealing side and/or the layer sequence b/c/b inside the film, whereby a denotes a layer consisting of a linear alternating copolymer consisting of carbon monoxide and at least one ethylenically unsaturated olefin, b denotes a polyamide-containing layer and c denotes an EVOH-containing layer.

17. Film according to one of claims 1 to 16, whereby the sealing layer (III) consists of at least one layer containing in each layer a polymer or a mixture of polymers from the group of polyethylenes (LDPE and HDPE), ethylene/α-olefin copolymers (LLDPE) produced with conventional Ziegler-Natta catalysts or with metallocene catalysts, other copolymers of ethylene, such as ethylene/propylene copolymers, ethylene/vinyl acetate copolymers (EVA), ethylene copolymers with unsaturated esters (EBA), copolymers of ethylene with α,β-monounsaturated dicarboxylic acids, such as acrylic acid or methacrylic acid, their metal salts with zinc or sodium and their alkyl (C₁-C₄) esters and optionally additives such as silicon oxide, calcium carbonate, magnesium silicate, aluminium silicate, calcium phosphate, higher aliphatic acid amides, higher aliphatic acid esters, waxes, metallic soaps and/or polydimethyl siloxanes, and/or containing polyolefins, such as e.g. polyethylene, polypropylene, ethylene/α-olefin copolymers, or copolymers of ethylene with vinyl acetate or α,β-monounsaturated dicarboxylic acids, such as acrylic acid or methacrylic acid, grafted with at least one monomer from the group of α,β-monounsaturated dicarboxylic acids, such as e.g. maleic acid, fumaric acid, itaconic acid or their acid anhydrides, acid esters, acid amides and acid imides.

18. Film according to one of claims 1 to 17, containing one or more bonding layers (IV), which contain a polyolefin, such as e.g. polyethylene, polypropylene or ethylene/α-olefin copolymer, or an ethylene/vinyl acetate copolymer grafted with at least one monomer from the group consisting of a,β-monounsaturated dicarboxylic acids, such as e.g. maleic acid, fumaric acid, itaconic acid or their acid anhydrides, acid esters, acid amides and acid imides, and/or which contain copolymers of ethylene with α,β-monounsaturated dicarboxylic acids, such as acrylic acid, methacrylic acid and/or their metal salts with zinc or sodium and/or their alkyl (C₁-C₄) esters, or corresponding graft polymers on polyolefins, such as e.g. polyethylene, polypropylene or ethylene/α-olefin copolymers, which are graft polymerised with a monomer from the group of α,β-monounsaturated dicarboxylic acids, such as e.g. maleic acid, fumaric acid, itaconic acid or their acid anhydrides, acid esters, acid amides and acid imides.

19. Film according to claim 18, whereby at least one bonding layer (IV) contains an ethylene/α-olefin copolymer with grafted α,β-monounsaturated dicarboxylic anhydride.

20. Film according to claim 19, whereby at least one bonding layer (IV), contains an ethylene/α-olefin copolymer with grafted maleic anhydride.

21. Film according to one of claims 1 to 20, whereby at least one bonding layer contains a polymer from the group of polyurethanes, polyester urethanes or polyacrylates.

22. Film according to one of claims 18 to 21, whereby a bonding layer joins together the outer layer (I) and a polyamide-containing layer (II).

23. Film according to one of claims 18 to 21, whereby a bonding layer joins together the sealing layer (III) and a polyamide-containing layer (II).

24. Film according to one of claims 1 to 23, whereby the outer layer (I) and at least one polyamide-containing layer (II) were produced by coextrusion.

25. Use of the film according to one of claims 1 to 24 for producing containers closed on all sides.

26. Use of the film according to one of claims 1 to 24 as a tray film on form-fill-seal machines for producing thermoformed containers closed by heat-sealing together with a lidding film.

27. Use of the film according to one of claims 1 to 24 for the packaging of foodstuffs.

## Revendications

1. Feuille multicouche consistant en une couche extérieure I, au moins une couche contenant un polyamide II, une couche de soudure III à au moins une épaisseur sur la face extérieure en regard de la couche I (la couche de soudure) de la feuille, et le cas échéant d'autres couches, cette feuille multicouche se caractérisant en ce que la couche extérieure I contient un copolymère linéaire alternant 1 du monoxyde de carbone et d'au moins une oléfine à insaturation éthylénique et en ce que la couche contenant un polyamide II contient au moins 50 % en poids d'un polyamide.

2. Feuille selon la revendication 1, contenant un copolymère 1 du monoxyde de carbone et d'une ou plusieurs oléfines du groupe consistant en l'éthylène et les alcènes en C₃-C₁₀, par exemple le propylène, le 1-butène, le 2-butène, le 1-pentène, le 1-hexène, le 1-octène, le 1-nonène, le 1-décène.

3. Feuille selon la revendication 2, dans laquelle le copolymère 1 est un copolymère ternaire 2 du monoxyde de carbone, de l'éthylène et du propylène.

4. Feuille selon la revendication 3, contenant un copolymère ternaire 2 du monoxyde de carbone, de l'éthylène et du propylène avec des motifs monomères de l'éthylène A et du propylène B en répartition statistique dans la chaîne polymère, le rapport stoechiométrique B/A de ces motifs monomères ne dépassant pas 0,5.

5. Feuille selon l'une des revendications 1 à 4, dans laquelle la couche contenant un polyamide II contient en proportion d'au moins 50 % de son poids, au moins un polyamide du groupe consistant en le polyamide 6, le polyamide 10, le polyamide 12, le polyamide 66, le polyamide 610, le polyamide 6I, le polyamide 6-12, le polyamide 6/66, le polyamide 6I/6T, le polyamide MXD6, le polyamide 6/6I, le polyamide 6/6T ou leurs mélanges.

6. Feuille selon la revendication 5, dans laquelle la couche contenant un polyamide II contient pour au moins 80 % de son poids, au moins un polyamide du groupe consistant en le polyamide 6, le polyamide 10, le polyamide 12, le polyamide 66, le polyamide 610, le polyamide 6I, le polyamide 6-12, le polyamide 6/66, le polyamide 6I/6T, le polyamide MXD6, le polyamide 6/6I, le polyamide 6/6T ou leurs mélanges.

7. Feuille selon l'une des revendications 1 à 6, dans laquelle le polyamide de la couche II contient au moins 80 % de son poids de polyamide 6.

8. Feuille selon l'une des revendications 1 à 7, dans laquelle la couche contenant un polyamide II contient au moins 80 % de son poids de polyamide 6.

9. Feuille selon l'une des revendications 1 à 8, dans laquelle la couche contenant un polyamide II ne contient pas d'autres polymères en dehors du polyamide.

10. Feuille selon l'une des revendications 1 à 9, contenant en outre au moins une couche V contenant un copolymère éthylène/alcool vinylique (EVOH).

11. Feuille selon la revendication 10, dans laquelle au moins une couche V contient au moins 50 % de son poids d'un copolymère éthylène/alcool vinylique (EVOH).

12. Feuille selon l'une des revendications 1 à 11, dans laquelle la couche extérieure I est juxtaposée directement contre une couche II contenant un polyamide sans autre couche de liaison.

13. Feuille selon la revendication 12, dans laquelle une couche contenant un polyamide II est disposée directement, sans autre couche de liaison, entre la couche extérieure I et une autre couche VII, qui contient un copolymère linéaire alternant du monoxyde de carbone et d'au moins une oléfine à insaturation éthylénique.

14. Feuille selon la revendication 13, dans laquelle les couches I et VII contiennent le même copolymère linéaire alternant du monoxyde de carbone et d'au moins une oléfine à insaturation éthylénique.

15. Feuille selon l'une des revendications 1 à 11, dans laquelle la couche extérieure I est directement, sans autre couche de liaison, contre une couche V contenant un copolymère éthylène/alcool vinylique (EVOH).

16. Feuille selon l'une des revendications 1 à 11, qui contient, sur la face extérieure opposée à la face de soudure, les séquences de couches a/b/a, a/c/b, a/c/a/b, a/b/c/b ou a/b/c/b/a et/ou, dans l'intérieur de la feuille, la séquence de couches b/c/b, a désignant une couche d'un copolymère linéaire alternant du monoxyde de carbone et d'au moins une oléfine à insaturation éthylénique, b une couche contenant un polyamide et c une couche contenant un EVOH.

17. Feuille selon l'une des revendications 1 à 16, dans laquelle la couche de soudure III consiste en au moins une couche, chacune des couches contenant un polymère ou un mélange de polymères du groupe des polyéthylènes (LDPE et HDPE), des copolymères éthylène/α-oléfine (LLDPE) préparés à l'aide de catalyseurs classiques de Ziegler-Natta ou de catalyseurs à base de métallocènes, d'autres copolymères de l'éthylène tels que des copolymères éthylène/propylène, des copolymères éthylène/acétate de vinyle (EVA), des copolymères de l'éthylène et d'esters insaturés (EBA), des copolymères de l'éthylène et d'acides dicarboxyliques α,β-monoinsaturés comme l'acide acrylique ou l'acide méthacrylique, leurs sels de zinc ou de sodium ou leurs esters alkyliques en C₁-C₄ et le cas échéant des additifs tels que la silice, le carbonate de calcium, le silicate de magnésium, le silicate d'aluminium, le phosphate de calcium, des amides aliphatiques supérieurs, des esters d'acides aliphatiques supérieurs, des cires, des savons métalliques et/ou des polydiméthylsiloxanes, et/ou contenant des polyoléfines telles que le polyéthylène, le polypropylène, les copolymères éthylène/α-oléfine ou les copolymères de l'éthylène et de l'acétate de vinyle ou d'acides dicarboxyliques α,β-monoinsaturés comme l'acide acrylique ou l'acide méthacrylique, greffés par au moins un monomère du groupe des acides dicarboxyliques α,β-monoinsaturés comme l'acide maléique, l'acide furamique, l'acide itaconique ou leurs anhydrides, leurs esters, leurs amides et leurs imides.

18. Feuille selon l'une des revendications 1 à 17, contenant une ou plusieurs couches IV conférant l'adhérence, qui contiennent une polyoléfine, par exemple un polyéthylène, un polypropylène ou un copolymère éthylène/α-oléfine ou un copolymère éthylène/acétate de vinyle, greffé par au moins un monomère du groupe des acides dicarboxyliques α,β-monoinsaturés comme l'acide maléique, l'acide fumarique, l'acide itaconique ou leurs anhydrides, leurs esters, leurs amides et imides, et/ou des copolymères de l'éthylène et d'acides dicarboxyliques α,β-monoinsaturés comme l'acide acrylique, l'acide méthacrylique et/ou leurs sels de zinc ou de sodium et/ou leurs esters alkyliques en C₁-C₄ ou les polymères greffés correspondants sur des polyoléfines telles que le polyéthylène, le polypropylène ou les copolymères éthylène/α-oléfine, polymérisés par greffage avec un monomère du groupe des acides dicarboxyliques α,β-monoinsaturés comme l'acide maléique, l'acide fumarique, l'acide itaconique ou leurs anhydrides, leurs esters, leurs amides ou imides.

19. Feuille selon la revendication 18, contenant au moins une couche conférant l'adhérence IV qui contient un copolymère éthylène/α-oléfine greffé par un anhydride d'acide dicarboxylique α,β-monoinsaturé.

20. Feuille selon la revendication 19, dans laquelle au moins une couche conférant l'adhérence IV contient un copolymère éthylène/α-oléfine greffé par l'anhydride maléique.

21. Feuille selon l'une des revendications 1 à 20, dans laquelle au moins une couche conférant l'adhérence contient un polymère du groupe des polyuréthannes, des polyester-uréthannes ou des polyacrylates.

22. Feuille selon l'une des revendications 18 à 21, dans laquelle une couche conférant l'adhérence associe entre elles la couche extérieure I et une couche contenant un polyamide II.

23. Feuille selon l'une des revendications 18 à 21, dans laquelle une couche conférant l'adhérence relie entre elles la couche de soudure III et une couche contenant un polyamide II.

24. Feuille selon l'une des revendications 1 à 23, dans laquelle la couche extérieure I et au moins une couche contenant un polyamide II sont formées par co-extrusion.

25. Utilisation de la feuille selon l'une des revendications 1 à 24, pour la fabrication de récipients entièrement hermétiques.

26. Utilisation de la feuille selon l'une des revendications 1 à 24, en tant que feuille de cuvette sur des machines à mouler-remplir et souder pour la fabrication de récipients thermoformés, fermés par soudure avec une feuille de couvercle.

27. Utilisation de la feuille selon l'une des revendications 1 à 24, pour l'emballage de produits alimentaires.
